(19)

**Europäisches Patentamt**
**European Patent Office**
**Office européen des brevets**

(11) **EP 3 132 515 B1**

(12) **EUROPÄISCHE PATENTSCHRIFT**

(45) Veröffentlichungstag und Bekanntmachung des Hinweises auf die Patenterteilung:
**30.01.2019 Patentblatt 2019/05**

(21) Anmeldenummer: **14731591.5**

(22) Anmeldetag: **13.06.2014**

(51) Int Cl.:
*H02J 3/18* (2006.01)          *H02M 7/49* (2007.01)
*H02M 1/32* (2007.01)

(86) Internationale Anmeldenummer:
**PCT/EP2014/062410**

(87) Internationale Veröffentlichungsnummer:
**WO 2015/188877 (17.12.2015 Gazette 2015/50)**

(54) **UMRICHTER ZUR BLINDLEISTUNGSABGABE SOWIE VERFAHREN ZU DESSEN REGELUNG**

CONVERTER FOR OUTPUTTING REACTIVE POWER, AND METHOD FOR CONTROLLING SAID CONVERTER

ONDULEUR POUR DÉLIVRER DE LA PUISSANCE RÉACTIVE ET PROCÉDÉ DE RÉGULATION DE CELUI-CI

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**22.02.2017 Patentblatt 2017/08**

(73) Patentinhaber: **Siemens Aktiengesellschaft**
**80333 München (DE)**

(72) Erfinder:
• **PIESCHEL, Martin**
  **90473 Nürnberg (DE)**
• **SIEGL, Christian**
  **90518 Altdorf (DE)**
• **WIESINGER, Markus**
  **91301 Forchheim (DE)**

(56) Entgegenhaltungen:
EP-A1- 2 541 752     US-A- 5 642 275

• QIANG SONG ET AL: "Multilevel Optimal Modulation and Dynamic Control Strategies for STATCOMs Using Cascaded Multilevel Inverters", IEEE TRANSACTIONS ON POWER DELIVERY, IEEE SERVICE CENTER, NEW YORK, NY, US, Bd. 10, Nr. 3, 1. Juli 2007 (2007-07-01), Seiten 1937-1946, XP011186626, ISSN: 0885-8977

• HIROFUMI AKAGI: "Classification, Terminology, and Application of the Modular Multilevel Cascade Converter (MMCC)", IEEE TRANSACTIONS ON POWER ELECTRONICS, INSTITUTE OF ELECTRICAL AND ELECTRONICS ENGINEERS, USA, Bd. 26, Nr. 11, 1. November 2011 (2011-11-01), Seiten 3119-3130, XP011369856, ISSN: 0885-8993, DOI: 10.1109/TPEL.2011.2143431

• RAINER MARQUARDT: "Modular Multilevel Converter topologies with DC-Short circuit current limitation", POWER ELECTRONICS AND ECCE ASIA (ICPE&ECCE), 2011 IEEE 8TH INTERNATIONAL CONFERENCE ON, IEEE, 30. Mai 2011 (2011-05-30), Seiten 1425-1431, XP031956047, DOI: 10.1109/ICPE.2011.5944451 ISBN: 978-1-61284-958-4

• MAKOTO HAGIWARA ET AL: "Negative-Sequence Reactive-Power Control by a PWM STATCOM Based on a Modular Multilevel Cascade Converter (MMCC-SDBC)", IEEE TRANSACTIONS ON INDUSTRY APPLICATIONS, IEEE SERVICE CENTER, PISCATAWAY, NJ, US, Bd. 48, Nr. 2, 1. März 2012 (2012-03-01), Seiten 720-729, XP011434198, ISSN: 0093-9994, DOI: 10.1109/TIA.2011.2182330

**Beschreibung**

Die Erfindung betrifft einen Umrichter zur Blindleistungskompensation sowie ein Regelungsverfahren für einen solchen Umrichter.

Umrichter dieser Art sind aus dem Stand der Technik bekannt. Beispielsweise zeigt die Druckschrift WO 2013/087110 A1 einen Umrichter mit drei Phasenzweigen, die in einer Dreiecksschaltung miteinander verbunden sind. Jeder Phasenzweig weist einen Anschlusspunkt zum Anschluss an eine ihm zugeordnete Phase eines dreiphasigen Wechselspannungsnetzes auf. Dabei sind die Phasenzweige jeweils über Koppelinduktivitäten mit den zugeordneten Phasen des Wechselspannungsnetzes verbunden. Jeder Phasenzweig weist ein Phasenmodul mit einer Reihenschaltung von zweipoligen Submodulen auf, wobei die Submodule als sogenannte Vollbrückenschaltungen ausgebildet sind. Jedes Submodul umfasst demnach zwei zueinander parallel geschaltete Reihenschaltungen von Leistungshalbleiterschalteinheiten, wobei jede Leistungshalbleiterschalteinheit einen ausschaltbaren Leistungshalbleiter sowie eine dazu antiparallele Diode umfasst. Ferner weist jedes Submodul einen zu den beiden Reihenschaltungen parallel geschalteten Energiespeicher in Form eines Kondensators auf. Jedes Submodul kann derart angesteuert werden, dass an dessen Polen eine Spannung abfällt, die entweder der Spannung des Kondensators, der Spannung des Kondensators jedoch mit umgekehrter Polarität oder einer Nullspannung, also einer Spannung mit dem Wert Null, entspricht. Damit kann mittels geeigneter Ansteuerung der Submodule eine stufenförmige Wechselspannung an den Phasenmodulen des Umrichters erzeugt werden. Die Stufenhöhe entspricht dabei der Kondensatorspannung. Ferner umfasst der bekannte Umrichter eine Regelungseinrichtung zur Regelung der Ströme in den Phasenzweigen des Umrichters, so dass eine gewünschte induktive Blindleistung im Wechselspannungsnetz bereitgestellt werden kann.

Bei dem bekannten Umrichter ist jeder Phasenzweig in der Dreieckschaltung zusätzlich mit einer weiteren Phase des Wechselspannungsnetzes unmittelbar verbunden, also ohne eine Koppelinduktivität. Ist das angeschlossene Wechselspannungsnetz beispielsweise niederohmig geerdet, zum Beispiel über einen Sternpunkttransformator, so kann dies dazu führen, dass im Falle einer Erdberührung innerhalb des Umrichters Kurzschlussströme fließen, die eine dauerhafte Schädigung von Umrichterkomponenten zur Folge haben können. Auch bei einem hochohmig geerdeten Wechselspannungsnetz können die Kurzschlussströme durch Überschläge (beispielsweise aufgrund von Verschmutzung oder losem leitfähigen Material) zwischen den Phasenzweigen entstehen.

In dem Beitrag "Multilevel Optimal Modulation and Dynamic Control Strategies for STATCOMs Using Cascaded Multilevel Inverters" von Qiang Song et al. ist ein Umrichter zur Blindleistungsabgabe in Dreieckkonfiguration beschrieben, bei dem jeder der Phasenzweige zwei Koppelinduktivitäten aufweist. Diese Lösung weist einen Kostennachteil aufgrund der doppelten Anzahl der Koppelinduktivitäten auf.

Der Beitrag "Classification, Terminology, and Application of the Modular Multilevel Cascade Converter (MMCC)" von Hirofumi Akagi beschreibt einen modularen Mehrstufenumrichter zur AC/DC-Umwandlung, dessen Phasenzweige über Pufferinduktivitäten mit Mittelanzapfung mit dessen AC-Seite verbunden sind.

Aus der US 5 642 275 A ist ein Umrichter zur Blindleistungsabgabe bekannt, der über Verbindungsinduktivitäten mit dem Wechselspannungsnetz verbunden ist. Nachteilig bei dieser Lösung ist es, dass die Phasenzweige des Umrichters untereinander direkt, d.h. niederinduktiv verbunden sind, so dass im Fehlerfall innerhalb eines Phasenzweiges hohe Stromstöße in den anderen Phasenzweigen auftreten können.

Aufgabe der Erfindung ist es, einen Umrichter der obigen Art vorzuschlagen, bei dem das Risiko von Beschädigungen aufgrund von Kurzschlussströmen bei Kurzschlüssen innerhalb des Umrichters vermindert ist.

Die Aufgabe wird durch einen Umrichter gelöst, der erfindungsgemäß einen ersten, einen zweiten und einen dritten Phasenzweig umfasst, wobei die drei Phasenzweige jeweils mit einer zugeordneten Phase eines Wechselspannungsnetzes verbindbar und in einer Dreiecksschaltung miteinander verbunden sind, wobei jeder der Phasenzweige ein Phasenmodul mit einer Reihenschaltung zweipoliger Submodule aufweist, wobei jedes Submodul einen Energiespeicher sowie wenigstens einen Leistungshalbleiter aufweist und derart ansteuerbar ist, dass an den Polen des Submoduls wenigstens eine positive oder wenigstens eine negative Submodulspannung oder eine Spannung mit dem Wert Null abfällt, und eine an jedem Phasenmodul abfallende Spannung der Summe der an dessen Submodulen abfallenden Submodulspannungen entspricht, wobei der zweite und der dritte Phasenzweig mittels Koppelinduktivitäten mit den ihnen zugeordneten Phasen des Wechselspannungsnetzes verbunden sind, und der erste und der zweite Phasenzweig über ein magnetisch gekoppeltes erstes Drosselpaar, aufweisend einen ersten und einen zweiten seitlichen Anschluss sowie einen mittleren Anschluss, elektrisch miteinander verbunden sind, wobei die drei Anschlüsse des ersten Drosselpaares in einer beliebigen Kombination mit dem ersten Phasenzweig, dem zweiten Phasenzweig und mit der dem ersten Phasenzweig zugeordneten Phase des Wechselspannungsnetzes verbunden sind, wobei ferner eine Regelungseinrichtung zur Regelung von Phasenmodulströmen vorgesehen ist, umfassend den Phasenmodulen zugeordnete Stromregler, eine den Stromreglern vorgeordnete Entkopplungseinheit zum rechnerischen Entkoppeln von Regeldifferenzen bei der Regelung der Phasenmodulströme im Hinblick auf die gegenseitige Abhängigkeit der Phasenmodulströme aufgrund der magnetischen Kopplung im ersten Drosselpaar derart, dass mittels der Stromregler aus den entkoppelten Regeldifferenzen entkoppelte rechnerische Stellgrößen ableitbar sind, eine den Stromreglern nachgeordnete Kopplungseinheit zum Korrigieren der entkoppelten rechnerischen Stellgrößen gemäß der magnetischen Kopplung des ersten Drosselpaares unter Gewinnung von korrigierten Stellspannungen sowie eine Steuereinheit zum Ansteuern der Submodule, so dass die an den Phasenmodulen abfallenden Spannungen derart einstellbar sind, dass sie den korrigierten Stellspannungen entsprechen.

Gegenüber dem bekannten Umrichter ist demnach die im ersten Phasenzweig angeordnete einzelne Koppelinduktivität durch das erste magnetisch gekoppelte Drosselpaar ersetzt, das den ersten und den dritten Phasenzweig elektrisch verbindet. Anders ausgedrückt bildet die Koppelinduktivität zusammen mit einer weiteren Induktivität das erste Drosselpaar aus. Die magnetische Kopplung zwischen den beiden Drosseln des ersten Drosselpaares wird bei der Regelung der Phasenmodulströme mittels der vorgeschlagenen Regelungseinrichtung berücksichtigt.

Durch die vorgeschlagene Anordnung des Drosselpaares kann vorteilhaft die Gefahr von Kurzschlussströmen im Umrichter vermindert werden. Tritt im dritten Phasenzweig ein Kurzschluss gegenüber dem Erdpotenzial auf, so wird der Strom in jedem Fall durch das Drosselpaar und die Koppelinduktivität im dritten Phasenzweig begrenzt. Eine unmittelbare Verbindung zwischen einer Phase des Wechselspannungsnetzes und dem Erdberührungspunkt, also ein Strompfad, der über keine strombegrenzenden Induktivitäten führt, wird somit verhindert. Auf diese Weise kann eine Beschädigung der Komponenten des Umrichters verhindert werden.

Das magnetisch gekoppelte Drosselpaar kann beispielsweise in Form zweier räumlich beieinander angeordneten Drosselspulen realisiert sein. Die Drosselspulen können Luftspulen sein, sie können aber auch einen gemeinsamen ferromagnetischen Kern umfassen. Das Drosselpaar weist drei Anschlüsse auf: einen ersten und einen zweiten seitlichen Anschluss sowie einen mittleren Anschluss. Der mittlere Anschluss ist dabei an einer elektrischen Verbindung der beiden Drosselspulen angeordnet. Die drei Anschlüsse des Drosselpaares in beliebiger Weise dem ersten Phasenzweig, dem zweiten Phasenzweig sowie der Phase des Wechselspannungsnetz zugeordnet werden. Zum Beispiel kann der mittlere Anschluss mit der dem ersten Phasenzweig zugeordneten Phase des Wechselspannungsnetzes verbunden sein, während der erste seitliche Anschluss dem ersten Phasenzweig und der zweite seitliche Anschluss mit dem zweiten Phasenzweig verbunden ist. Die beiden Drosseln des Drosselpaares können einen gleichen Aufbau aufweisen, sie können aber auch unterschiedlich aufgebaut sein, beispielsweise können sie eine unterschiedliche Anzahl von Windungen aufweisen.

Die durch das magnetisch gekoppelte Drosselpaar ermöglichte kompakte Bauweise bzw. räumliche Nähe der beiden Drosseln des Drosselpaares benötigt eine vergleichsweise kleine Stellfläche, was die Kosten des gesamten Umrichters senkt.

Aus der magnetischen Kopplung zwischen den beiden Drosseln des ersten Drosselpaares ergibt sich eine Kopplung der Ströme in den Phasenzweigen. Um eine geregelte Blindleistungsaufnahme beziehungsweise Blindleistungsabgabe zu gewährleisten, muss bei der Regelung der Phasenmodulströme diese Abhängigkeit berücksichtigt werden. Gemäß einem mathematischen Modell der Regelung ergeben sich aus den Maschen- und Knotengleichungen im Umrichter die Transformationen zwischen einem rechnerischen entkoppelten mathematischen Regelungssystem samt der zugehörigen Gleichungen und einem gekoppelten mathematischen Regelungssystem. Geeigneterweise ergibt sich insbesondere ein Gleichungssystem mit Koeffizienten, die den magnetischen Kopplungskonstanten der magnetischen Kopplung im Drosselpaar sowie den Induktivitätswerten der Drosseln und Koppelinduktivitäten entsprechen. In diesem Zusammenhang ist die Entkopplungseinheit dazu vorgesehen, aus den untereinander gekoppelten Regeldifferenzen (da es sich um ein lineares Gleichungssystem handelt, können die Transformationen auch auf die Soll- und Istströme angewendet werden) rechnerisch zu entkoppeln, also in das mathematische entkoppelte System von Strömen zu überführen. Die entkoppelten Regeldifferenzen werden den Stromreglern zugeführt, die aus den Regeldifferenzen rechnerische Stellgrößen ermitteln. Die rechnerischen Stellgrößen sind demnach nicht zur Regelung der Phasenmodulströme verwendbar, da sie lediglich einen rechnerischen Zwischenschritt darstellen. Diese Stellgrößen müssen im nächsten Schritt gemäß den magnetischen Kopplungen korrigiert werden, um die eigentlichen Stellgrößen zu erhalten, die als korrigierte Stellspannungen bezeichnet sind. Die dazu gehörenden mathematischen Transformationen ergeben sich wiederum aus den Zustandsgleichungen der Ströme im Umrichter. Die Korrektur der rechnerischen Stellgrößen übernimmt die Kopplungseinheit. Erst die korrigierten Stellspannungen werden sinnvollerweise an die Steuereinheit gegeben, die daraus die Steuersignale für die einzelnen Submodule der Phasenmodule erzeugt.

Gemäß einer vorteilhaften Ausführungsform der Erfindung ist ein zweites magnetisch gekoppeltes Drosselpaar vorgesehen, das aus der dem zweiten Phasenzweig zugeordneten Koppelinduktivität und einer weiteren Induktivität gebildet ist, und das den ersten und den zweiten Phasenzweig miteinander verbindet, wobei das zweite Drosselpaar mit einem ersten und einem zweiten seitlichen Anschluss sowie einem mittleren Anschluss versehen ist, wobei die drei Anschlüsse des zweiten Drosselpaares in beliebiger Kombination mit dem ersten Phasenzweig, dem zweiten Phasenzweig oder mit der dem zweiten Phasenzweig zugeordneten Phase des Wechselspannungsnetzes verbunden sind. Ferner ist ein drittes magnetisch gekoppeltes Drosselpaar vorgesehen, das aus der dem dritten Phasenzweig zugeordneten Koppelinduktivität und einer zusätzlichen Induktivität gebildet ist, und das den zweiten und den dritten Phasenzweig miteinander verbindet, wobei das dritte Drosselpaar mit einem ersten und einem zweiten seitlichen Anschluss sowie einem mittleren Anschluss versehen ist, wobei die drei Anschlüsse des dritten Drosselpaares in beliebiger Kombination mit dem zweiten Phasenzweig, dem dritten Phasenzweig oder mit der dem dritten Phasenzweig zugeordneten Phase des Wechselspannungsnetzes verbunden sind. Dabei ist die Entkopplungseinheit zum rechnerischen Entkoppeln der Regeldifferenzen im Hinblick auf die gegenseitige Abhängigkeit der Phasenmodulströme aufgrund der magnetischen Kopplung im zweiten und dritten Drosselpaar zusätzlich eingerichtet, wobei die Kopplungseinheit zum Korrigieren der mittels der Stromregler aus den entkoppelten Regeldifferenzen gewonnenen entkoppelten rechnerischen Stellgrößen gemäß der magnetischen Kopplung im ersten, zweiten und dritten Drosselpaar unter Gewinnung der korrigierten Stellspannungen eingerichtet ist.

Mit anderen Worten sind also auch der erste und der zweite Phasenzweig über ein magnetisch gekoppeltes zweites Drosselpaar miteinander verbunden, so dass die einzelne Koppelinduktivität im zweiten Phasenzweig eine der Drosseln des zweiten Drosselpaares ausbildet. Der zweite und der dritte Phasenzweig sind ebenfalls über ein magnetisch gekoppeltes drittes Drosselpaar miteinander verbunden, so dass die einzelne Koppelinduktivität im dritten Phasenzweig eine der Drosseln des dritten Drosselpaares ausbildet.

Auf diese Weise sind bei der Regelung der Phasenmodulströme in den drei Phasenzweigen des Umrichters alle Abhängigkeiten zwischen den Strömen aufgrund der magnetischen Kopplungen zwischen den Drosseln der drei Drosselpaare berücksichtigt. Ohne die Berücksichtigung dieser Abhängigkeiten wäre ein geregelter Betrieb des Umrichters nicht möglich.

Besonders vorteilhaft bei dieser Ausführungsform ist die Verminderung der Schäden durch Kurzschlussströme in allen drei Phasenmodulen des Umrichters, da jeder Kurzschlussstrom durch mindestens zwei Induktivitäten der Drosselpaare begrenzt wird.

Bevorzugt sind die Submodule als Vollbrückenschaltungen ausgebildet, wobei die Leistungshalbleiterschalter der Submodule beispielsweise Bipolartransistoren mit isolierter Gate-Elektrode (IGBT) oder Metall-Oxid-Halbleiter-Feldeffekttransistoren (MOSFET) sind. Die Submodulspannungen entsprechen in diesem Fall den an den Energiespeichern der Submodule abfallenden Energiespeicherspannungen.

Es ist jedoch ebenfalls denkbar, die Submodule unterschiedlich auszubilden, um den Umrichter der jeweiligen Anwendung besser anzupassen. In diesem Zusammenhang sind auch Submodule denkbar, die einen von einer Vollbrücke abweichenden Aufbau haben. Insbesondere sind Submodule verwendbar, an deren Polen mehrere positive und/oder mehrere negative Spannungswerte der Submodulspannung durch geeignete Ansteuerung einstellbar sind, zum Beispiel ein erster und ein zweiter positiver und/oder ein erster und ein zweiter negativer Spannungswert. Beispiele für derartige Submodule sind in dem Beitrag "Novel DC-AC Converter Topology for Multilevel Battery Energy Storage Systems" von M. Gommeringer et.al, PCIM Europe 2013, beschrieben. Die an dem Phasenmodul abfallende Spannung entspricht der Summe der an den Submodulen eingestellten Submodulspannungen.

Vorzugsweise sind die Energiespeicher der Submodule Speicherkondensatoren, besonders bevorzugt Hochleistungs-Speicherkondensatoren, um die hohen Anforderungen der Hochspannungsanwendung besser zu erfüllen.

Gemäß einer vorteilhaften Ausführungsform der Erfindung weist die Regelungseinrichtung ferner eine an die Entkopplungseinheit angeschlossene Steuereinheit zur Ansteuerung der Submodule mittels Pulsweitenmodulation (PWM) auf. Als Steuerverfahren kann jedes geeignete PWM-Verfahren oder auch das aus der Druckschrift WO 2008/086760 A1 bekannte Verfahren verwendet werden. Die Steuereinheit kann in Form von so genannten Modul-Management-Systemen (MMS) ausgeführt sein, wobei jedem der drei Phasenmodule ein MMS zugeordnet ist.

Bevorzugt umfasst der Umrichter Messvorrichtungen wie Spannungs- und/oder Stromwandler zur Erfassung der Phasenmodulströme und der Anschlussspannungen. Beispielsweise können die Stromwandler in einem oder mehreren der Phasenzweige angeordnet sein. Ferner können auch kapazitive Spannungswandler vorgesehen sein, um die Anschlussspannungen zu messen.

Gemäß einer weiteren bevorzugten Ausführungsform umfasst die Regelungseinrichtung des Umrichters ferner eine Signalverarbeitungseinheit mit wenigstens einem Mittelwertbildner, wenigstens einem Differenzbildner, wenigstens einem Spannungsregler, wenigstens einem Frequenzbildner sowie wenigstens einem Addierer. Dabei ist in der Signalverarbeitungseinheit der Mittelwertbildner dazu eingerichtet, einen Mittelwert der Energiespeicherspannungen des zugeordneten Phasenmoduls zu bilden, wobei der Differenzbildner eingangsseitig mit einem Ausgang des Mittelwertbildners verbunden und dazu eingerichtet ist, eine Regeldifferenz aus dem Mittelwert der Energiespeicherspannungen und einem vorgegebenen Gleichspannungssollwert zu bilden; der Spannungsregler ist eingangsseitig mit einem Ausgang des Differenzbildners verbunden und dazu eingerichtet, aus der Regeldifferenz einen Wirk-Sollstromwert zu bilden; der Frequenzbildner eingangsseitig mit einem Ausgang des Spannungsreglers verbunden und dazu eingerichtet, aus dem Wirk-Sollstromwert einen sinusförmigen Wirk-Sollstrom zu bilden und der Addierer ist eingangsseitig mit einem Ausgang des Frequenzbildners verbunden und dazu eingerichtet, aus dem Wirk-Sollstrom und einem vorgegebenen Blind-Sollstrom den Sollstrom für das zugeordnete Phasenmodul zu bilden.

Demnach setzt sich der (Wechsel-)Sollstrom für jedes Phasenmodul aus zwei Anteilen zusammen: dem Wirk- und dem Blind-Sollstrom. Dabei dient die Aufnahme einer Wirkleistung durch den Umrichter zum Ausgleich eines unerwünschten Spannungsabfalls in den Energiespeichern der Submodule. Der Spannungsregler kann beispielsweise ein geeigneter linearer Regler sein.

Vorzugsweise ist die Signalverarbeitungseinheit Teil einer digitalen Datenverarbeitungsanlage. Sind die einzelnen Energiespeicher der Submodule unterschiedlich ausgebildet, so können die Energiespeicherspannungen auch mit zugeordneten unterschiedlichen Gleichspannungssollwerten verglichen werden, um die Energieaufnahme zu regeln. Es ist ebenfalls denkbar, die einfache Mittelwertbildung in dem Mittelwertbildner durch eine entsprechend an die verwendeten Submodule angepasste Berechnung, beispielsweise eine gewichtete Mittelwertbildung, zu ersetzen.

Der Frequenzbildner erzeugt aus dem konstanten oder sich in der Zeit langsam änderndem vorgegebenem Gleichspannungssollwert eine Wechselstromgröße, deren Phasenwinkel gleich dem Phasenwinkel der Spannung im Wechselspannungsnetz ist. Geeigneterweise steht der Ausgang der Signalverarbeitungseinheiten jeweils mit dem Eingang eines Stromreglers des zugeordneten Phasenmoduls in Verbindung.

Eine weitere Aufgabe der Erfindung ist es, ein Regelungsverfahren für den zuvor beschriebenen Umrichter vorzuschlagen, das eine geregelte Blindleistungsabgabe ermöglicht.

Die Aufgabe wird durch ein Regelungsverfahren gelöst, bei dem erfindungsgemäß für jedes Phasenmodul ein Sollstrom vorgegeben wird, mittels einer Entkopplungseinheit Regeldifferenzen, die aus den vorgegebenen Sollströmen und gemessenen Phasenmodulströmen gebildet werden, im Hinblick auf die gegenseitige Abhängigkeit der Phasenmodulströme aufgrund der magnetischen Kopplung im ersten Drosselpaar rechnerisch entkoppelt werden, so dass den Phasenmodulen zugeordnete, der Entkopplungseinheit nachgeordnete Stromregler jeweils aus den entkoppelten Regeldifferenzen entkoppelte rechnerische Stellgrößen ableiten und die entkoppelten rechnerischen Stellgrößen mittels einer den Stromreglern nachgeordneten Kopplungseinheit gemäß der magnetischen Kopplungen des ersten Drosselpaares unter Gewinnung von korrigierten Stellspannungen korrigiert werden, wobei die Submodule der Phasenmodule mittels einer Steuereinheit derart angesteuert werden, dass die an den Phasenmodulen abfallenden Spannungen den korrigierten Stellspannungen entsprechen.

Mittels der vorgeschlagenen erfindungsgemäßen Regelung kann ein geregelter Betrieb des erfindungsgemäßen Umrichters gewährleistet werden, so dass Blindleistungskompensation im angeschlossenen Wechselspannungsnetz möglich ist.

Eine bevorzugte Ausführungsform des Regelungsverfahrens ist insbesondere auf einen Umrichter anwendbar, bei dem ein zweites magnetisch gekoppeltes Drosselpaar vorgesehen ist, das aus der dem zweiten Phasenzweig zugeordneten Koppelinduktivität und einer weiteren Induktivität gebildet ist, und das den ersten und den zweiten Phasenzweig miteinander verbindet, wobei das zweite Drosselpaar mit einem ersten und einem zweiten seitlichen Anschluss sowie einem mittleren Anschluss versehen ist, wobei die drei Anschlüsse des zweiten Drosselpaares in beliebiger Kombination mit dem ersten Phasenzweig, dem zweiten Phasenzweig oder mit der dem zweiten Phasenzweig zugeordneten Phase des Wechselspannungsnetzes verbunden sind, und ein drittes magnetisch gekoppeltes Drosselpaar vorgesehen ist, das aus der dem dritten Phasenzweig zugeordneten Koppelinduktivität und einer zusätzlichen Induktivität gebildet ist, und das den zweiten und den dritten Phasenzweig miteinander verbindet, wobei das dritte Drosselpaar mit einem ersten und einem zweiten seitlichen Anschluss sowie einem mittleren Anschluss versehen ist, wobei die drei Anschlüsse des dritten Drosselpaares in beliebiger Kombination mit dem zweiten Phasenzweig, dem dritten Phasenzweig oder mit der dem dritten Phasenzweig zugeordneten Phase des Wechselspannungsnetzes verbunden sind, wobei mittels der Entkopplungseinheit die Regeldifferenzen im Hinblick auf die gegenseitige Abhängigkeit der Phasenmodulströme aufgrund der magnetischen Kopplung im ersten, zweiten und dritten Drosselpaar rechnerisch entkoppelt werden, so dass den Phasenmodulen zugeordnete, der Entkopplungseinheit nachgeordnete Stromregler jeweils aus den entkoppelten Regeldifferenzen entkoppelte rechnerische Stellgrößen ableiten und die entkoppelten rechnerischen Stellgrößen mittels einer den Stromreglern nachgeordneten Kopplungseinheit gemäß der magnetischen Kopplungen des ersten, zweiten und dritten Drosselpaares unter Gewinnung von korrigierten Stellspannungen korrigiert werden. Demnach sind hierbei die Koppelinduktivitäten im zweiten und dritten Phasenzweig in die magnetisch gekoppelten zweiten und dritten Drosselpaare miteinbezogen. Dadurch kann die Gefahr von Kurzschlussströmen in allen Phasenzweigen des Umrichters gemindert werden.

Vorzugsweise werden die korrigierten Stellspannungen jeweils mit einer Störspannung beaufschlagt, wobei die Störspannungen in Abhängigkeit von zwischen den Phasenzweigen abfallenden Anschlussspannungen bestimmt werden, und die mit den Störspannungen beaufschlagten, korrigierten Stellspannungen der Steuereinheit zugeführt werden. Die Störspannungen werden mittels entsprechender Messvorrichtungen ermittelt. Sie entsprechen denjenigen Spannungen, durch die Ströme aus dem Wechselspannungsnetz in die einzelnen Phasenzweige des Umrichters getrieben werden. Daher haben die Störspannungen gemäß der hier verwendeten Definition zu den Spannungen an den Phasenmodulen des Umrichters entgegengesetzte Vorzeichen.

Bevorzugt werden die Stellspannungen mittels Pulsweitenmodulation (PWM) in Steuersignale zur Ansteuerung der zugeordneten Submodule umgewandelt.

Gemäß einer weiteren bevorzugten Ausführungsform des Regelungsverfahrens werden die Sollströme jeweils aus einem Wirk-Sollstrom und einem Blind-Sollstrom zusammengesetzt, wobei die Wirk-Sollströme in Abhängigkeit von einem Mittelwert der an den Submodulen abfallenden Spannungen des zugeordneten Phasenmoduls und einem vorgegebenen Gleichspannungssollwert bestimmt werden.

Die Erfindung wird im Folgenden im Zusammenhang mit den in Figuren 1 -6 dargestellten Ausführungsbeispielen des erfindungsgemäßen Umrichters erläutert.

Figur 1 zeigt ein erstes Ausführungsbeispiel. eines erfindungsgemäßen Umrichters in schematischer Darstellung.

Figur 2 zeigt ein Ausführungsbeispiel eines Submoduls des erfindungsgemäßen Umrichters in schematischer Darstellung.

Figur 3 zeigt ein Ausführungsbeispiel eines magnetisch gekoppelten Drosselpaares in schematischer Darstellung.

Figur 4 zeigt ein Ausführungsbeispiel einer Regelungseinrichtung des erfindungsgemäßen Umrichters.

Figur 5 zeigt ein zweites Ausführungsbeispiel eines erfindungsgemäßen Umrichters in schematischer Darstellung.

Figur 6 zeigt ein drittes Ausführungsbeispiel eines erfindungsgemäßen Umrichters in schematischer Darstellung.

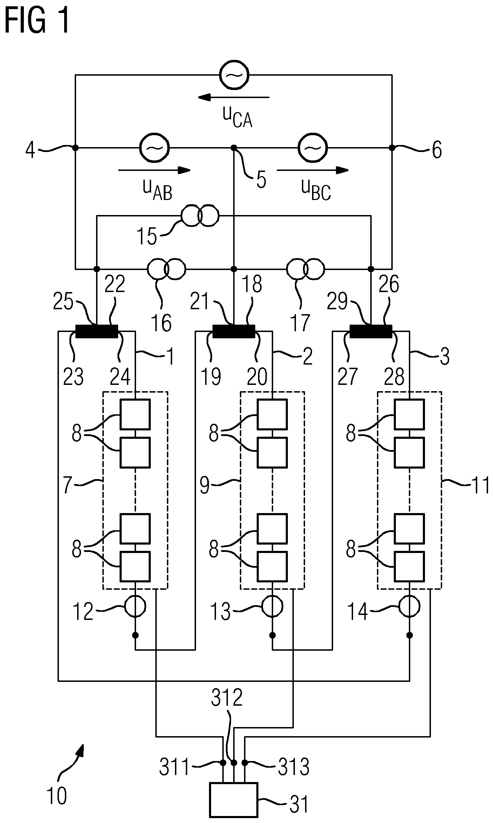

Im Einzelnen ist in Figur 1 ein Ausführungsbeispiel eines erfindungsgemäßen Umrichters 10 dargestellt. Der Umrichter 10 weist einen ersten Phasenzweig 1, einen zweiten Phasenzweig 2 sowie einen dritten Phasenzweig 3 auf. Der erste Phasenzweig 1 weist einen Anschlusspunkt 4 zum Anschluss an ein Wechselspannungsnetz auf. Das Wechselspannungsnetz ist in Figur 1 nicht grafisch dargestellt. Dementsprechend weisen die Phasenzweige 2 und 3 jeweils die Anschlusspunkte 5 und 6 auf, die die Phasenzweige 2, 3 jeweils mit ihnen zugeordneten Phasen des Wechselspannungsnetzes verbinden.

Der erste Phasenzweig 1 umfasst ein Phasenmodul 7. Das Phasenmodul 7 weist eine Reihenschaltung von Submodulen 8 auf. Im Allgemeinen umfasst das Phasenmodul 7 eine beliege Anzahl von Phasenmodulen 8, wobei in Figur 1 lediglich vier Submodule 8 grafisch dargestellt sind. Die Anzahl m der Submodule 8 richtet sich nach dem zu erzeugenden Spannungen im Submodul 7. Auch die Phasenzweige 2, 3 weisen Phasenmodule 9 beziehungsweise 11 auf. Die Phasenmodule 9, 11 umfassen ebenfalls jeweils eine Reihenschaltung von Submodulen 8. Im in Figur 1 dargestellten Ausführungsbeispiel des Umrichters 10 umfassen die Phasenmodule 7, 9, 11 die gleiche Anzahl von Submodulen 8. Es ist jedoch ebenfalls denkbar, dass die Anzahl der Submodule 8 in den Phasenmodulen der einzelnen Phasenzweige 1, 2, 3 unterschiedlich ist. Im dargestellten Ausführungsbeispiel des Umrichters 10 sind die Submodule 8 gleich aufgebaut. Auch hier ist denkbar, die Submodule 8 unterschiedlich auszugestalten.

Die Phasenmodulströme werden mittels Meßvorrichtungen 12, 13, 14 gemessen.

Die Spannungen zwischen den Anschlusspunkten 4, 5, 6, die in Figur 1 mit UAB, UBC beziehungsweise UCA bezeichnet sind, werden mittels entsprechender Messvorrichtungen, beispielsweise Spannungswandler 15, 16 und 17 gemessen.

Der erste Phasenzweig 1 und der dritte Phasenzweig 3 sind über ein magnetisch gekoppeltes erstes Drosselpaar 22 miteinander verbunden, das seitliche Anschlüsse 23 und 24, sowie einen mittleren Anschluss 25 aufweist. Der seitliche Anschluss 23 ist mit dem dritten Phasenzweig 3, der zweite seitliche Anschluss 24 mit dem ersten Phasenzweig 1 verbunden. Der mittlere Anschluss 25 des Drosselpaares 22 ist mit dem Anschlusspunkt 4 und darüber mit der dem ersten Phasenzweig 1 zugeordneten Phase des Wechselspannungsnetzes verbunden.

Der erste Phasenzweig 1 und der zweite Phasenzweig 2 sind über ein magnetisch gekoppeltes zweites Drosselpaar 18 miteinander verbunden. Das zweite Drosselpaar 18 verfügt über zwei seitliche Anschlüsse 19 beziehungsweise 20, wobei der seitliche Anschluss 19 mit dem ersten Phasenzweig 1 verbunden ist, und der zweite seitlich Anschluss 20 mit dem zweiten Phasenzweig 2 verbunden ist. Ferner weist das zweite Drosselpaar 18 einen mittleren Anschluss 21 auf, der mit der dem zweiten Phasenzweig 2 zugeordneten Phase des Wechselspannungsnetzes verbindbar ist.

Des Weiteren sind der zweite und der dritte Phasenzweig 2, 3 über ein drittes Drosselpaar 26 verbunden. Das magnetisch gekoppelte dritte Drosselpaar 26 verfügt über seitliche Anschlüsse 27 und 28 sowie einen mittleren Anschluss 29. Der Anschluss 27 ist dabei mit dem zweiten Phasenzweig 2, der Anschluss 28 mit dem dritten Phasenzweig 3 und der Anschluss 29 mit dem Anschlusspunkt 6 zum Verbinden an die dem dritten Phasenzweig zugeordnete Phase des Wechselspannungsnetzes verbunden.

Der Umrichter 10 weist ferner eine hier nur schematisch dargestellte Regelungseinrichtung 31 auf, die mittels Steuerausgänge 311, Steuerausgänge 312 und Steuerausgänge 313 zum Regeln der Phasenmodulströme eingerichtet ist.

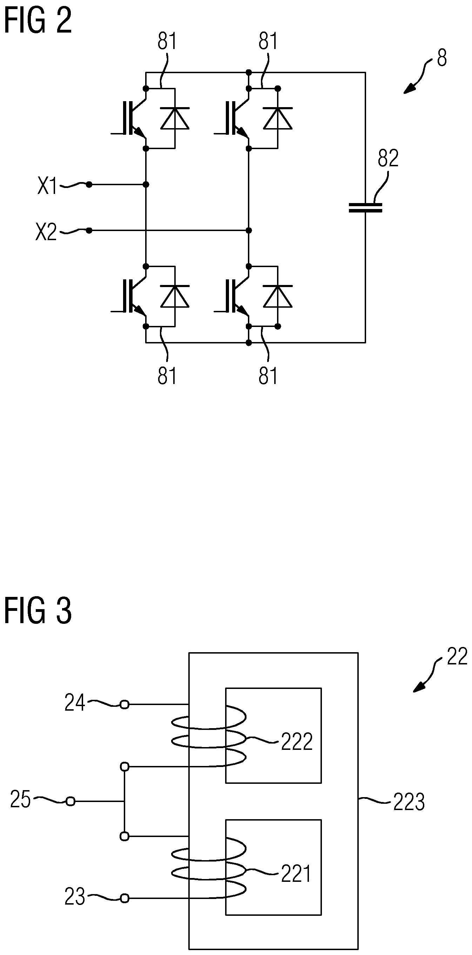

In Figur 2 wird auf den Aufbau der Submodule 8 näher eingegangen. Das Submodul 8 ist als Zweipol ausgebildet, wobei die beiden Pole des Submoduls 8 in Figur 2 mit X1 und X2 gekennzeichnet sind. Das Submodul 8 der Figur 2 ist als eine sogenannte Vollbrückenschaltung oder H-Brückenschaltung ausgebildet. Es weist zwei Reihenschaltungen von Leistungshalbleiterschalteinheiten 81 auf, die jeweils aus einer Parallelschaltung eines ausschaltbaren Leistungshalbleiterschalters und einer ihm antiparallel geschalteten Diode bestehen. Ferner umfasst das Submodul 8 einen Energiespeicher 82, der im in Figur 2 dargestellten Ausführungsbeispiel als ein Speicherkondensator ausgebildet ist. Dabei ist der Speicherkondensator in einer Parallelschaltung zu den beiden Reihenschaltungen mit den Leistungshalbleiterschalteinheiten 81 geschaltet. Durch geeignete Ansteuerung der Submodule über die Steuerausgänge 311, 312, 313 der Regelungseinrichtung 31, die in Figur 2 nicht dargestellt ist, können die Submodule 8 jeweils derart angesteuert werden, dass an den beiden Klemmen X1 beziehungsweise X2 der Submodule eine Submodulspannung abfällt, die gleich der am Kondensator 82 abfallenden Spannung, der Spannung am Kondensator 82 jedoch mit umgekehrter Polarität oder einer Spannung mit dem Wert Null gleich ist. Dadurch kann in einem zeitlichen Ablauf an jedem der Phasenmodule 7, 8, 9 ein Spannungsverlauf erzeugt werden, der einer gestuften Wechselspannung entspricht.

Figur 3 zeigt eine schematische Darstellung eines der magnetische gekoppelten Drosselpaare 18,22,26 des Umrichters 10 der Figur 1. Im Einzelnen ist in Figur 3 das erste Drosselpaar 22 dargestellt. Die zweiten und dritten Drosselpaare 18 sowie 26 sind im hier gezeigten Ausführungsbeispiel des Umrichters 10 gleich aufgebaut wie das Drosselpaar 22. Es ist jedoch denkbar, die Drosselpaare 22, 18, 26 unterschiedlich auszugestalten. Das magnetisch gekoppelte erste Drosselpaar 22 weist einen ersten seitlichen Anschluss 23 auf, einen zweiten seitlichen Anschluss 24 sowie einen mittleren Anschluss 25 auf. Ferner umfasst das Drosselpaar 22 eine erste Drossel 221 sowie eine zweite Drossel 222. Die beiden Drosseln 221 und 222 sind in räumlicher Nähe zueinander angeordnet. Auf diese Weise entsteht zwischen den beiden Drosseln 221, 222 eine magnetische Kopplung, die bei der Regelung des Umrichters 10 der Figur 1 nicht zu vernachlässigen ist, im Gegensatz zu nicht gekoppelten Drosseln. Die beiden Drosseln 221, 222 sind um einen gemeinsamen Kern 223 gewickelt, der aus einem ferromagnetischen Material hergestellt ist. In diesem Zusammenhang sei darauf hingewiesen, dass auch eine Luftkopplung der beiden Drosseln 221, 223 möglich ist.

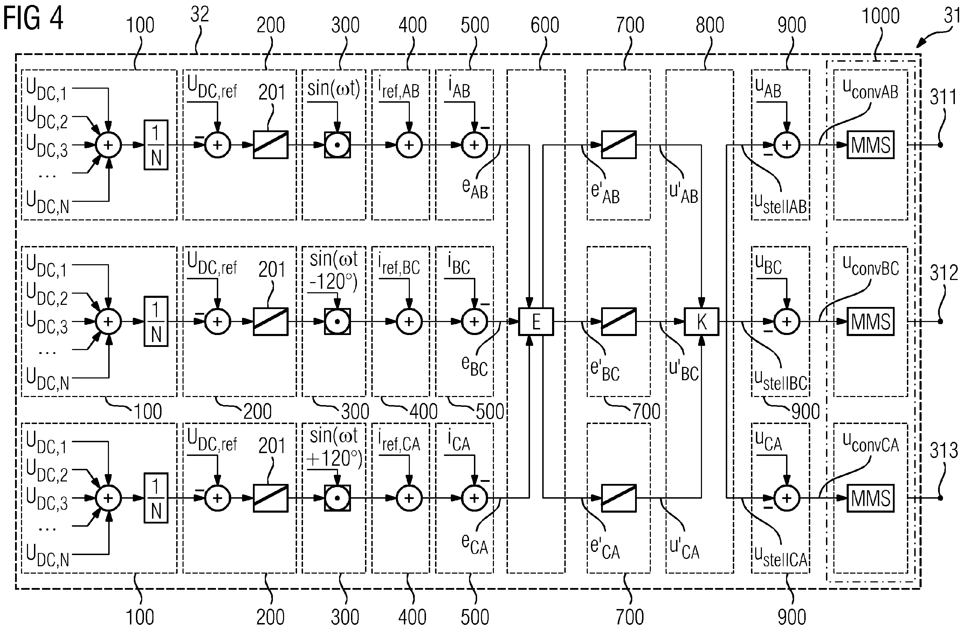

Figur 4 zeigt im Detail den Aufbau eines Ausführungsbeispiels einer Signalverarbeitungseinheit 32 der Regelungseinrichtung 31 des Umrichters 10 aus dem Ausführungsbeispiel Figur 1. Zum besseren Verständnis des Aufbaus sind die einzelnen Komponenten der Signalverarbeitungseinheit 32 in Form von Blöcken 100 bis 1000 gegliedert. Die in den Blöcken 100 bis 500 ablaufenden Regelungsschritte finden parallel für die drei Phasenmodule 7, 8, 9 des ersten, zweiten bzw. des dritten Phasenzweiges 1, 2, 3 statt. Im Folgenden werden diese Regelungsschritte zur Vermeidung von Wiederholungen nur für das Phasenmodul 7 des ersten Phasenzweiges 1 im Detail beschrieben. In einem Mittelwertbildner 100 werden die Spannungen UDC1 bis UDCN der Energiespeicher 16 der Submodule 8 des Phasenmoduls 7 addiert und durch eine Teilung durch die Anzahl N der Submodule im Phasenmodul ein Mittelwert dieser Spannungen gebildet. In einem Differenzbildner 200 wird die Differenz zwischen dem Mittelwert der im Block 100 ermittelten Spannungen mit einem Gleichspannungssollwert UDCREF verglichen und an einen Spannungsregler 201 gegeben, der am Ausgang des Differenzbildners 200 einen Wirk-Sollstromwert liefert. In einem Frequenzbildner 300 wird der ermittelte Wirk-Sollstromwert zu einer Wechselstromgröße umgewandelt, indem aus dem Wirk-Sollstromwert der Wirk-Sollstrom erzeugt wird. Der Wirk-Sollstrom ist eine Wechselstromgröße, deren Phase der Phase der Netzspannung im Wechselspannungsnetz entspricht. Mittels eines Addierers 400 wird ein vorgegebener Blind-Sollstrom irefAC für das Phasenmodul 7 zu dem Wirk-Sollstrom hinzuaddiert. Hierbei ist zu beachten, dass die vorgegebenen Blind-Sollströme für die beiden anderen Phasenmodule 8, 9, die in Figur 4 mit irefBC beziehungsweise irefCA bezeichnet sind, sich in ihrem Wert und zeitlichem Verlauf von irefAB im Allgemeinen unterscheiden. In einer Einheit 500 wird der aus dem Wirk-Sollstrom und dem Blind-Sollstrom berechnete Sollstrom mit einem mittels des Strommessers 11 gemessener Phasenmodulstrom iAB unter Bildung eines Regeldifferenzen eAB verglichen. Für die beiden Phasenmodule 8, 9 werden entsprechend die Regeldifferenzen eBC und eCA erzeugt.

Die Regeldifferenzen eAB, eBC und eCA werden einer Entkopplungseinheit 600 zugeführt. Mittels der Entkopplungseinheit werden die Regeldifferenzen rechnerisch Entkoppelt, wobei die Entkopplung im Hinblick auf die gegenseitige Abhängigkeit der Phasenmodulströme aufgrund der magnetischen Kopplung in den Drosselpaaren berücksichtigt wird. Die Entkopplung kann gemäß einem Ausführungsbeispiel mathematisch folgendermaßen beschrieben werden. Sind mit x=(iconvAB, iconvBC, iconvCA) ein Vektor der Phasenmodulströme und mit u=(uAB-uconvAB, uBCuconvBC, uCA-uconvCA) ein Vektor der Differenzen zwischen den Anschlussspannungen und den an den Phasenmodulen abfallenden Spannungen bezeichnet, so kann die zeitliche Ableitung dx/dt der Phasenmodulströme mittels der Gleichung

$$\mathrm{dx/dt = M1*x+M2*u}$$

beschrieben werden. Die 3x3-Matrizen M1 und M2 in der obigen Gleichung berücksichtigen die gegenseitige Abhängigkeit der Phasenmodulströme aufgrund der magnetischen Kopplung in den Drosselpaaren. Durch eine Transformation T kann die Matrix M1 in Diagonalform überführt werden, so dass die gegenseitigen Abhängigkeiten der Phasenmodulströme rechnerisch aufgelöst werden, was hier als Entkopplung bezeichnet wird. Die Tranformation T kann aufgrund der Linearität des mathematischen Gleichungssystems auch auf die Regeldifferenzen eAB, eBC, eCA angewandt werden. In diesem Fall ergeben sich durch die Entkopplung entkoppelte Regeldifferenzen e'AB, e'BC, e'CA. Die entkoppelten Regeldifferenzen e'AB, e'BC, e'CA werden den der Entkopplungseinheit 600 nachgeordneten Stromreglern 700 zugeführt. Die Stromregler 700 bestimmen daraus entkoppelte rechnerische Stellgrößen u'AB, u'BC, u'CA. Eine den Stromreglern 700 nachgeordnete Kopplungseinheit 800 berechnet aus den entkoppelten Stellgrößen anschließend korrigierte Stellspannungen ustellAB, ustellBC, ustellCA, wobei durch die Korrektur die magnetischen Kopplung in den Drosselpaaren wieder berücksichtigt wird.

Die Entkopplung kann beispielsweise wie folgt ausgeführt werden:

$$\texttt{e'AB=(-eAB+2*eBC-eCA)/3,}$$

$$\texttt{e'BC=(-eAB-eBC+2*eCA)/3,}$$

$$\texttt{e'CA=(eAB+eBC+eCA)/3.}$$

Für die Kopplung gilt dann:

$$\texttt{ustellAB=(M-L)*u'AB+(M-L)*u'BC+(L+2*M)*u'CA,}$$

$$\texttt{ustellBC=(L-M)*u'AB+(L+2*M)*u'CA,}$$

$$\texttt{ustellCA=(L-M)*u'BC+(L+2*M)*u'CA,}$$

wobei M die magnetische Wechselwirkung zwischen den Drosseln eines der Drosselpaare und L den Induktivitätswert der Drosseln der Drosselpaare bezeichnet. M und L sind hierbei für alle Drosselpaare gleich, weil in diesem Ausführungsbeispiel die Drosselpaare gleich ausgeführt sind, was jedoch in dem Allgemeinfall nicht erforderlich ist.

Gemäß dem in den Figuren 1 bis 4 gezeigten Ausführungsbeispiel werden die korrigierten Stellspannungen ustellAB, ustellBC, ustellCA in den Einheiten 900 mit gemessenen Störspannungen beaufschlagt, die in diesem Ausführungsbeispiel gemessenen Anschlussspannungen uAB, uBC und uCA entsprechen. Durch diese zweite Korrektur werden einzustellende Phasenmodulspannungen uconvAB, uconvBC, uconvCA gewonnen. Diese werden an die Steuereinheit 1000 weiter geleitet, wobei die Steuereinheit 1000 sogenannte Module-Management-Systeme (MMS) umfasst. Mittels der MMS werden die einzustellenden Phasenmodulspannungen in Steuersignale für die Submodule 8 umgewandelt. Mittels der Steuerausgänge 311, 312, 313 werden die Steuersignale an die Submodule geleitet.

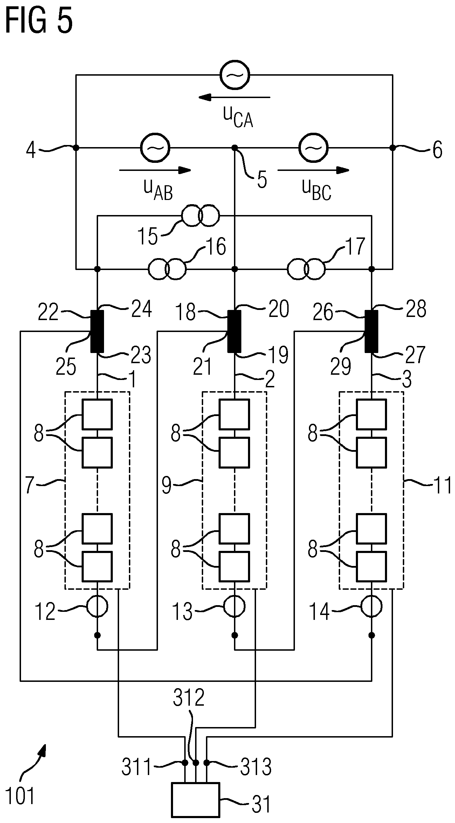

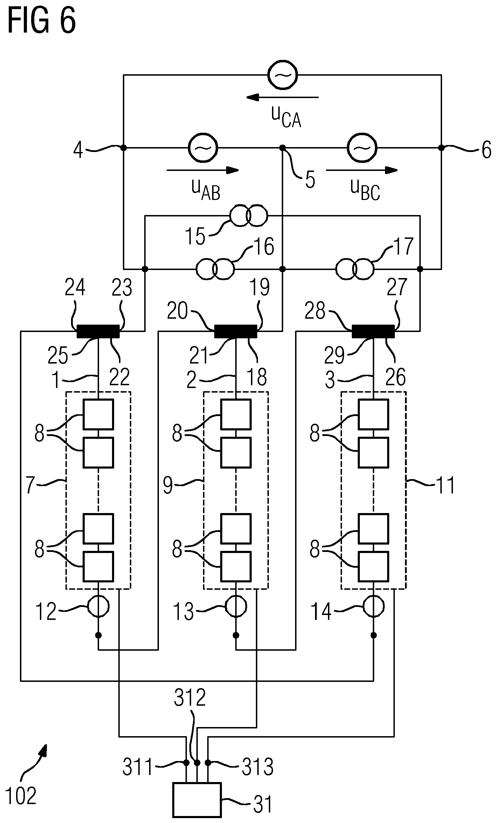

In Figur 5 ist ein zweites Ausführungsbeispiel eines erfindungsgemäßen Umrichters 101 dargestellt. In den Figuren 1 und 5 sind gleiche oder gleichartige Teile mit gleichen Bezugszeichen versehen. Zur Vermeidung von Wiederholungen wird in der Beschreibung der Figur 5 lediglich auf die Unterschiede zwischen den Ausführungsformen der Figuren 1 und 5 eingegangen. Auch sind die Submodule 8 des Umrichters 20 gleich aufgebaut und entsprechen den Submodulen 8 der Figur 2. Dies gilt entsprechend auch für ein in Figur 6 dargestellte dritte Ausführungsbeispiel eines erfindungsgemäßen Umrichters 102.

Figuren 5 und 6 illustrieren insbesondere zwei weitere Möglichkeiten der Anordnung der Drosselpaare 18, 22 und 26.

In Figur 5 ist der seitliche Anschluss 24 des ersten Drosselpaares 22 mit dem Anschlusspunkt 4 verbunden. Der mittlere Anschluss 25 ist mit dem dritten Phasenzweig 3 verbunden. Der seitliche Anschluss 23 ist mit dem ersten Phasenzweig 1 verbunden. Der seitliche Anschluss 20 des zweiten Drosselpaares 18 ist mit dem Anschlusspunkt 5 verbunden. Der mittlere Anschluss 21 ist mit dem ersten Phasenzweig 1 verbunden. Der seitliche Anschluss 19 ist mit dem zweiten Phasenzweig 2 verbunden. Der seitliche Anschluss 28 des dritten Drosselpaares 26 ist mit dem Anschlusspunkt 6 verbunden. Der mittlere Anschluss 29 ist mit dem zweiten Phasenzweig 2 verbunden. Der seitliche Anschluss 27 ist mit dem dritten Phasenzweig 3 verbunden.

In Figur 6 ist der seitliche Anschluss 23 des ersten Drosselpaares 22 mit dem Anschlusspunkt 4 verbunden. Der mittlere Anschluss 25 ist mit dem ersten Phasenzweig 1 verbunden. Der seitliche Anschluss 24 ist mit dem dritten Phasenzweig 3 verbunden. Der seitliche Anschluss 19 des zweiten Drosselpaares 18 ist mit dem Anschlusspunkt 5 verbunden. Der mittlere Anschluss 21 ist mit dem zweiten Phasenzweig 2 verbunden. Der seitliche Anschluss 20 ist mit dem ersten Phasenzweig 1 verbunden. Der seitliche Anschluss 27 des dritten Drosselpaares 26 ist mit dem Anschlusspunkt 6 verbunden. Der mittlere Anschluss 29 ist mit dem dritten Phasenzweig 3 verbunden. Der seitliche Anschluss 26 ist mit dem zweiten Phasenzweig 2 verbunden.

Die Regelung der Umrichter 101, 102 aus den Figuren 5 und 6 erfolgt entsprechend mittels der in Figur 4 dargestellten Regelungseinrichtung 31. Die dort beschriebene Entkopplung und Kopplung unterscheiden sich jedoch durch die Verwendung unterschiedlicher Transformationen M1, M2, T. Die Transformationen tragen dabei der verschiedenen Kopplung in den Drosselpaaren Rechnung.

Bezugszeichenliste

| | |
|---|---|
| 1,2,3 | Phasenzweig |
| 4,5,6 | Anschlusspunkt |
| 7,9,11 | Phasenmodul |
| 8 | Submodul |
| 81 | Leistungshalbleiterschalteinheit |
| 82 | Kondensator |
| 10 | Umrichter |
| 12,13,14 | Meßvorrichtung |
| 15,16,17 | Meßvorrichtung |
| 18,22,26 | Drosselpaar |
| 19,20,21 | Anschluss |
| 23,24,25 | Anschluss |
| 27,28,29 | Anschluss |
| 221,222 | Wicklung |
| 223 | Spulenkern |
| 31 | Regelungseinrichtung |
| 311,312,313 | Steuerausgänge |
| 32 | Signalverarbeitungseinheit |
| 100 | Mittelwertbildner |
| 200 | Differenzbildner |
| 300 | Frequenzbildner |
| 400 | Addierer |
| 500 | Einheit |
| 600 | Entkopplungseinheit |
| 700 | Stromregler |
| 800 | Kopplungseinheit |
| 900 | Einheit |
| 1000 | Steuereinheit |
| X1,X2 | Anschluss des Submoduls |
| UDC1...UDCN | Energiespeicherspannung |
| UDCREF | Gleichspannungssollwert |
| irefAB,irefBC,irefCA | Blind-Sollstrom |
| iAB,iBC,iCA | Phasenmodulstrom |
| eAB,eBC,eCA | Regeldifferenz |
| e'AB,e'BC,e'CA | entkoppelte Regeldifferenz |
| u'AB,u'BC,u'CA | rechnerische Stellgröße |
| ustellAB,ustellBC,ustellCA | korrigierte Stellspannung |
| uconvAB, uconvBC, uconvCA | einzustellende Spannung |
| MMS | Module Management System |

**Patentansprüche**

1. Umrichter (10, 101, 102) zur Blindleistungsabgabe, umfassend
   einen ersten, einen zweiten und einen dritten Phasenzweig (1, 2, 3), wobei die drei Phasenzweige (1, 2, 3) jeweils mit einer zugeordneten Phase eines Wechselspannungsnetzes verbindbar und in einer Dreiecksschaltung miteinander verbunden sind, wobei

jeder der Phasenzweige ein Phasenmodul (7, 9, 11) mit einer Reihenschaltung zweipoliger Submodule (8) aufweist, wobei

jedes Submodul (8) einen Energiespeicher (82) sowie wenigstens einen Leistungshalbleiter (81) aufweist und derart ansteuerbar ist, dass an den Polen ($X_1$, $X_2$) des Submoduls wenigstens eine positive oder wenigstens eine negative Submodulspannung oder eine Spannung mit dem Wert Null abfällt, und eine an jedem Phasenmodul (7, 9, 11) abfallende Spannung der Summe der an dessen Submodulen (8) abfallenden Submodulspannungen entspricht, wobei die Submodule (8) als Vollbrückenschaltungen ausgebildet sind, wobei der zweite und der dritte Phasenzweig (2,3) mittels Koppelinduktivitäten mit den ihnen zugeordneten Phasen des Wechselspannungsnetzes verbunden sind, und

der erste und der dritte Phasenzweig (1, 3) über ein magnetisch gekoppeltes erstes Drosselpaar (22), aufweisend einen ersten und einen zweiten seitlichen Anschluss (23, 24) sowie einen mittleren Anschluss (25), elektrisch miteinander verbunden sind, wobei

die drei Anschlüsse (23, 24, 25) des ersten Drosselpaares (22) in einer beliebigen Kombination mit dem ersten Phasenzweig (1), dem dritten Phasenzweig (3) und mit der dem ersten Phasenzweig zugeordneten Phase des Wechselspannungsnetzes verbunden sind, wobei

ferner eine Regelungseinrichtung (31) zur Regelung von Phasenmodulströmen vorgesehen ist, umfassend

- den Phasenmodulen zugeordnete Stromregler (700),
- eine den Stromreglern (700) vorgeordnete Entkopplungseinheit (600) zum rechnerischen Entkoppeln von Regeldifferenzen bei der Regelung der Phasenmodulströme im Hinblick auf die gegenseitige Abhängigkeit der Phasenmodulströme aufgrund der magnetischen Kopplung im ersten Drosselpaar (22) derart, dass mittels der Stromregler (700) aus den entkoppelten Regeldifferenzen entkoppelte rechnerische Stellgrößen (U'AB, U'BC, U'CA) ableitbar sind,
- eine den Stromreglern (700) nachgeordnete Kopplungseinheit (800) zum Korrigieren der entkoppelten rechnerischen Stellgrößen gemäß der magnetischen Kopplung des ersten Drosselpaares unter Gewinnung von korrigierten Stellspannungen (UstellAB, UstellBC, ustellCA) sowie
- eine Steuereinheit (1000) zum Ansteuern der Submodule (8), so dass die an den Phasenmodulen abfallenden Spannungen derart einstellbar sind, dass sie den korrigierten Stellspannungen entsprechen.

2. Umrichter (10, 101, 102) nach Anspruch 1, wobei ein zweites magnetisch gekoppeltes Drosselpaar (18) vorgesehen ist, das aus der dem zweiten Phasenzweig (2) zugeordneten Koppelinduktivität und einer weiteren Induktivität gebildet ist und das den ersten und den zweiten Phasenzweig (12) miteinander verbindet, wobei das zweite Drosselpaar mit einem ersten und einem zweiten seitlichen Anschluss (19, 20) sowie einem mittleren Anschluss (21)versehen ist, wobei

die drei Anschlüsse des zweiten Drosselpaares (18) in beliebiger Kombination mit dem ersten Phasenzweig (1), dem zweiten Phasenzweig (2) oder mit der dem zweiten Phasenzweig (2) zugeordneten Phase des Wechselspannungsnetzes verbunden sind, und

ein drittes magnetisch gekoppeltes Drosselpaar (26) vorgesehen ist, das aus der dem dritten Phasenzweig (3) zugeordneten Koppelinduktivität und einer zusätzlichen Induktivität gebildet ist und das den zweiten und den dritten Phasenzweig (2, 3) miteinander verbindet, wobei das dritte Drosselpaar (26) mit einem ersten und einem zweiten seitlichen Anschluss (27, 28) sowie einem mittleren Anschluss (29) versehen ist, wobei

die drei Anschlüsse (27, 28, 29) des dritten Drosselpaares (26) in beliebiger Kombination mit dem zweiten Phasenzweig (2), dem dritten Phasenzweig (3) oder mit der dem dritten Phasenzweig zugeordneten Phase des Wechselspannungsnetzes verbunden sind, wobei

die Entkopplungseinheit (600) zum rechnerischen Entkoppeln der Regeldifferenzen (eAB, eBC, eCA) im Hinblick auf die gegenseitige Abhängigkeit der Phasenmodulströme aufgrund der magnetischen Kopplung im zweiten und dritten Drosselpaar (18, 26) zusätzlich eingerichtet ist, und
die Kopplungseinheit (800) zum Korrigieren der mittels der Stromregler aus den entkoppelten Regeldifferenzen (e'AB, e'BC, e'CA) gewonnenen entkoppelten rechnerischen Stellgrößen gemäß der magnetischen Kopplung im ersten, zweiten und dritten Drosselpaar (18, 22, 26) unter Gewinnung der korrigierten Stellspannungen eingerichtet ist.

3. Umrichter (10, 101, 102) nach Anspruch 1 oder 2, wobei die Submodulspannung der Energiespeicherspannung entspricht.

4. Umrichter (10, 101, 102) nach einem der Ansprüche 1 bis 3 wobei
die Energiespeicher (82) Speicherkondensatoren sind.

5. Umrichter (10, 101, 102) nach einem der vorangehenden Ansprüche, wobei
die Steuereinheit (1000) zur Ansteuerung der Submodule (8) mittels Pulsweitenmodulation eingerichtet ist.

6. Umrichter (10, 101, 102) nach einem der vorangehenden Ansprüche, wobei
der Umrichter (10, 101, 102) ferner Meßvorrichtungen (12, 13, 14) zur Erfassung der Phasenmodulströme und von zwischen den Phasenzweigen abfallenden Anschlußspannungen (UAB, UBC, UCA) umfasst.

7. Umrichter (10, 101, 102) nach einem der vorangehenden Ansprüche, wobei die Regelungseinrichtung (31) ferner den Phasenmodulen zugeordnete Signalverarbeitungseinheit (32) mit einem Mittelwertbildner (100), einem Differenzbildner (200), einem Spannungsregler (201), einem Frequenzbildner (300) sowie einem Addierer (400) umfasst, wobei in der Signalverarbeitungseinheit

der Mittelwertbildner dazu eingerichtet ist, einen Mittelwert der Energiespeicherspannungen des zugeordneten Phasenmoduls zu bilden,
der Differenzbildner eingangsseitig mit einem Ausgang des Mittelwertbildners verbunden und dazu eingerichtet ist, eine Regeldifferenz aus dem Mittelwert der Energiespeicherspannungen und einem vorgegebenen Gleichspannungssollwert zu bilden,
der Spannungsregler eingangsseitig mit einem Ausgang des Differenzbildners verbunden und dazu eingerichtet ist, aus der Regeldifferenz einen Wirk-Sollstromwert zu bilden,
der Frequenzbildner eingangsseitig mit einem Ausgang des Spannungsreglers verbunden und dazu eingerichtet ist, aus dem Wirk-Sollstromwert einen sinusförmigen Wirk-Sollstrom zu bilden und
der Addierer eingangsseitig mit einem Ausgang des Frequenzbildners verbunden und dazu eingerichtet ist, aus dem Wirk-Sollstrom und einem vorgegebenen Blind-Sollstrom den Sollstrom für das zugeordnete Phasenmodul zu bilden.

8. Verfahren zur Regelung eines Umrichters (10, 101, 102) zur Blindleistungsabgabe mit einem ersten, einem zweiten und einem dritten Phasenzweig (1, 2, 3), wobei die drei Phasenzweige jeweils mit einer ihnen zugeordneten Phase eines Wechselspannungsnetzes verbindbar und in einer Dreiecksschaltung miteinander verbunden sind, wobei jeder der Phasenzweige ein Phasenmodul (7, 9, 11) mit einer Reihenschaltung zweipoliger Submodule (8) aufweist, wobei

jedes Submodul (8) einen Energiespeicher (82) sowie wenigstens einen Leistungshalbleiter aufweist und derart ansteuerbar ist, dass an den Polen des Submoduls wenigstens eine positive oder wenigstens eine negative Submodulspannung oder eine Spannung mit dem Wert Null abfällt,
und eine an jedem Phasenmodul abfallende Spannung der Summe der an dessen Submodulen (8) abfallenden Submodulspannungen entspricht, wobei die Submodule (8) als Vollbrückenschaltungen ausgebildet sind, wobei

- der zweite und der dritte Phasenzweig (2, 3) mittels Koppelinduktivitäten mit den ihnen zugeordneten Phasen des Wechselspannungsnetzes verbunden sind, und
- der erste und der dritte Phasenzweig (1, 3) über ein magnetisch gekoppeltes erstes Drosselpaar (22), umfassend einen ersten und einen zweiten seitlichen Anschluss (23, 24) sowie einen mittleren Anschluss (25), miteinander verbunden sind, wobei

die drei Anschlüsse (23, 24, 25) des Drosselpaares (22) beliebiger Kombination mit dem ersten Phasenzweig, dem dritten Phasenzweig und mit der dem ersten Phasenzweig zugeordneten Phase des Wechselspannungsnetzes verbunden sind,
bei dem

- für jedes Phasenmodul (7, 9, 11) ein Sollstrom vorgegeben wird,
- mittels einer Entkopplungseinheit (600) Regeldifferenzen (eAB, eBC, eCA), die aus den vorgegebenen Sollströmen und gemessenen Phasenmodulströmen gebildet werden, im Hinblick auf die gegenseitige Abhängigkeit der Phasenmodulströme aufgrund der magnetischen Kopplung im ersten Drosselpaar (22) rechnerisch entkoppelt werden, so dass den Phasenmodulen zugeordnete, der Entkopplungseinheit nachgeordnete Stromregler (700) jeweils aus den entkoppelten Regeldifferenzen (eAB, eBC, eCA) entkoppelte rechnerische Stellgrößen (U'AB, U'BC, U'CA) ableiten und
- die entkoppelten rechnerischen Stellgrößen mittels einer den Stromreglern nachgeordneten Kopplungseinheit (800) gemäß der magnetischen Kopplungen des ersten Drosselpaares (22) unter Gewinnung von korrigierten Stellspannungen (UstellAB, UstellBC, UstellCA) korrigiert werden, wobei
- die Submodule (8) der Phasenmodule (7, 9, 11) mittels einer Steuereinheit (1000) derart angesteuert werden, dass die an den Phasenmodulen abfallenden Spannungen den korrigierten Stellspannungen entsprechen.

9. Verfahren nach Anspruch 8, wobei ein zweites magnetisch gekoppeltes Drosselpaar (18) vorgesehen ist, das aus der dem zweiten Phasenzweig (2) zugeordneten Koppelinduktivität und einer weiteren Induktivität gebildet ist, und das den ersten und den zweiten Phasenzweig (1, 2) miteinander verbindet, wobei das zweite Drosselpaar (18) mit einem ersten und einem zweiten seitlichen Anschluss (19, 20) sowie einem mittleren Anschluss (21) versehen ist, wobei

die drei Anschlüsse des zweiten Drosselpaares (18) in beliebiger Kombination mit dem ersten Phasenzweig (1), dem zweiten Phasenzweig (2) oder mit der dem zweiten Phasenzweig (2) zugeordneten Phase des Wechselspannungsnetzes verbunden sind, und

ein drittes magnetisch gekoppeltes Drosselpaar (26) vorgesehen ist, das aus der dem dritten Phasenzweig (3) zugeordneten Koppelinduktivität und einer zusätzlichen Induktivität gebildet ist, und das den zweiten und den dritten Phasenzweig (2, 3) miteinander verbindet, wobei das dritte Drosselpaar (26) mit einem ersten und einem zweiten seitlichen Anschluss (27, 28) sowie einem mittleren (29) Anschluss versehen ist, wobei

die drei Anschlüsse des dritten Drosselpaares (26) in beliebiger Kombination mit dem zweiten Phasenzweig, dem dritten Phasenzweig oder mit der dem dritten Phasenzweig zugeordneten Phase des Wechselspannungsnetzes verbunden sind, wobei

- mittels der Entkopplungseinheit (600) die Regeldifferenzen im Hinblick auf die gegenseitige Abhängigkeit der Phasenmodulströme aufgrund der magnetischen Kopplung im ersten, zweiten und dritten Drosselpaar rechnerisch entkoppelt werden, so dass den Phasenmodulen zugeordnete, der Entkopplungseinheit (600) nachgeordnete Stromregler (700) jeweils aus den entkoppelten Regeldifferenzen entkoppelte rechnerische Stellgrößen (U'AB, U'BC, U'CA) ableiten und
- die entkoppelten rechnerischen Stellgrößen mittels einer den Stromreglern nachgeordneten Kopplungseinheit gemäß der magnetischen Kopplungen des ersten, zweiten und dritten Drosselpaares (18, 22, 26) unter Gewinnung von korrigierten Stellspannungen korrigiert werden.

10. Verfahren nach Anspruch 8 oder 9, wobei die korrigierten Stellspannungen (Ustell AB, UstellBC, UstellCA) jeweils mit einer Störspannung (UAB, UBC, UCA) beaufschlagt werden, wobei die Störspannungen in Abhängigkeit von zwischen den Phasenzweigen abfallenden Anschlussspannungen bestimmt werden, und die mit den Störspannungen beaufschlagten korrigierten Stellspannungen (uconvAB, uconvBC, uconvCA) der Steuereinheit zugeführt werden.

11. Verfahren nach einem der Ansprüche 8 bis 10, wobei die Stellspannungen mittels Pulsweitenmodulation in Steuersignale zur Ansteuerung der zugeordneten Submodule (8) umgewandelt werden.

12. Verfahren nach einem der Ansprüche 8 bis 11, wobei die Sollströme jeweils aus einem Wirk-Sollstrom und einem Blind-Sollstrom zusammengesetzt werden, wobei die Wirk-Sollströme in Abhängigkeit von einem Mittelwert der an den Submodulen abfallenden Spannungen des zugeordneten Phasenmoduls und einem vorgegebenen Gleichspannungssollwert bestimmt werden.

**Claims**

1. Converter (10, 101, 102) for the output of reactive power, comprising

a first, a second and a third phase branch (1, 2, 3), wherein the three phase branches (1, 2, 3) can each be connected to an associated phase of an alternating voltage supply network, and are delta-connected to one another, wherein

each of the phase branches comprises a phase module (7, 9, 11) with a series circuit of two-pole submodules (8), wherein

each submodule (8) comprises an energy store (82) and at least one power semiconductor (81), and can be driven in such a way that at least one positive or at least one negative submodule voltage, or a voltage with the value zero, is dropped across the poles ($X_1$, $X_2$) of the submodule, and a voltage dropped across each phase module (7, 9, 11) corresponds to the sum of the submodule voltages dropped across its submodules (8), wherein the submodules (8) are constructed as full-bridge circuits,wherein

the second and the third phase branches (2, 3) are connected to the phases of the alternating voltage supply network assigned to them by means of coupling inductances, and
the first and the third phase branches (1, 3) are electrically connected together by a magnetically coupled first choke pair (22) comprising a first and a second end connection (23, 24) as well as a center connection (25), wherein

the three connections (23, 24, 25) of the first choke pair (22) are connected in an arbitrary combination with the first phase branch (1), the third phase branch (3) and with the phase of the alternating voltage supply network that is assigned to the first phase branch, wherein

furthermore a control device (31) is provided for control of phase module currents, comprising

- current controllers (700) assigned to the phase modules,
- a decoupling unit (600) arranged upstream of the current controllers (700) for computationally decoupling control differences during control of the phase module currents in respect of the mutual dependence of the phase module currents on account of the magnetic coupling in the first choke pair (22), in such a way that decoupled computer actuating variables (U'AB, U'BC, U'CA) can be derived from the decoupled control differences by means of the current controller (700),
- a coupling unit (800) which is arranged downstream of the current controllers (700) for correcting the decoupled computer actuating variables in accordance with the magnetic coupling of the first choke pair so as to obtain corrected actuating voltages (UstellAB, UstellBC, ustellCA), and
- a control unit (1000) for driving the submodules (8), so that the voltages which are dropped across the phase modules can be adjusted in such a way that they correspond to the corrected actuating voltages.

2. Converter (10, 101, 102) according to Claim 1, in which a second magnetically coupled choke pair (18) is provided, formed from the coupling inductance assigned to the second phase branch (2) and from a further inductance, and connects the first and the second phase branches (12) together, wherein the second choke pair has a first and a second end connection (19, 20) and a center connection (21), wherein

the three connections of the second choke pair (18) are joined in an arbitrary combination with the first phase branch (1), the second phase branch (2), or with the phase of the alternating voltage supply network that is assigned to the second phase branch (2), and

a third magnetically coupled choke pair (26) is provided, formed from the coupling inductance assigned to the third phase branch (3) and from an additional inductance, and connects the second and the third phase branches (2, 3) together, wherein the third choke pair (26) has a first and a second end connection (27, 28) and a center connection (29), wherein

the three connections (27, 28, 29) of the third choke pair (26) are joined in an arbitrary combination with the second phase branch (2), the third phase branch (3), or with the phase of the alternating voltage supply network that is assigned to the third phase branch, wherein

the decoupling unit (600) is additionally configured to computationally decouple the control differences (eAB, eBC, eCA) in respect of the mutual dependence of the phase module currents resulting from the magnetic coupling in the second and third choke pairs (18, 26), and
the coupling unit (800) is configured for correction of the decoupled computer actuating variables obtained by means of the current controller from the decoupled control differences (e'AB, e'BC, e'CA) in accordance with the magnetic coupling in the first, second and third choke pairs (18, 22, 26) so as to obtain the corrected actuating voltages.

3. Converter (10, 101, 102) according to Claim 1 or 2, wherein the submodule voltage corresponds to the energy store voltage.

4. Converter (10, 101, 102) according to one of Claims 1 to 3, wherein
the energy stores (82) are storage capacitors.

5. Converter (10, 101, 102) according to one of the previous claims, wherein
the control unit (1000) is configured for driving the submodules (8) by means of pulse-width modulation.

6. Converter (10, 101, 102) according to one of the previous claims, wherein
the converter (10, 101, 102) further comprises measuring apparatus (12, 13, 14) for detecting the phase module currents and connection voltages (UAB, UBC, UCA) dropped across the phase branches.

7. Converter (10, 101, 102) according to one of the previous claims, wherein the control device (31) further comprises a signal processing unit (32) assigned to the phase modules with a mean value generator (100), a difference generator (200), a voltage controller (201), a frequency generator (300) and an adder (400), wherein in the signal processing unit

the mean value generator is configured to generate a mean value of the energy store voltages of the assigned phase module,
the difference generator is connected on the input side to an output of the mean value generator, and is configured to generate a control difference from the mean value of the energy store voltages and a predetermined DC voltage setpoint value,
the voltage regulator is connected on the input side to an output of the difference generator, and is configured to generate a real setpoint current value from the control difference,
the frequency generator is connected on the input side to an output of the voltage controller, and is configured to generate a sinusoidal real setpoint current from the real setpoint current value, and
the adder is connected on the input side to an output of the frequency generator, and is configured to generate the setpoint current for the assigned phase module from the real setpoint current and a predefined reactive setpoint current.

8. Method for controlling a converter (10, 101, 102) for the output of reactive power, with a first, a second and a third phase branch (1, 2, 3), wherein the three phase branches can each be connected to an associated phase of an alternating voltage supply network, and are delta-connected to one another, wherein

each of the phase branches comprises a phase module (7, 9, 11) with a series circuit of two-pole submodules (8), wherein

each submodule (8) comprises an energy store (82) and at least one power semiconductor, and can be driven in such a way that at least one positive or at least one negative submodule voltage, or a voltage with the value zero, is dropped across the poles of the submodule,
and a voltage dropped across each phase module corresponds to the sum of the submodule voltages dropped across its submodules (8), wherein the submodules (8) are constructed as full-bridge circuits, wherein

- the second and the third phase branches (2, 3) are connected to the phases of the alternating voltage supply network assigned to them by means of coupling inductances, and
- the first and the third phase branches (1, 3) are connected together by a magnetically coupled first choke pair (22) comprising a first and a second end connection (23, 24) as well as a center connection (25), wherein the three connections (23, 24, 25) of the choke pair (22) are joined in an arbitrary combination with the first phase branch, the third phase branch, and with the phase of the alternating voltage supply network that is assigned to the first phase branch,

in which

- a setpoint current is predetermined for each phase module (7, 9, 11),

**EP 3 132 515 B1**

- by means of a decoupling unit (600) control differences (eAB, eBC, eCA), that are formed from the predetermined setpoint currents and the measured phase module currents, in respect of the mutual dependence of the phase module currents on account of the magnetic coupling in the first choke pair (22), are computationally decoupled in such a way that current controllers (700) arranged downstream from the decoupling unit assigned to the phase modules each derive decoupled computer actuating variables (U'AB, U'BC, U'CA) from the decoupled control differences (eAB, eBC, eCA), and
- the decoupled computer actuating variables are corrected by means of a coupling unit (800) which is arranged downstream of the current controllers in accordance with the magnetic coupling of the first choke pair (22) so as to obtain corrected actuating voltages (UstellAB, UstellBC, ustellCA), wherein
- the sub modules (8) of the phase modules (7, 9, 11) are driven by means of a control unit (1000) in such a way that the voltages dropped across the phase modules correspond to the corrected actuating voltages.

9. Method according to Claim 8, wherein a second magnetically coupled choke pair (18) is provided, formed from the coupling inductance assigned to the second phase branch (2) and from a further inductance, and connects the first and the second phase branches (1, 2) together, wherein the second choke pair (18) has a first and a second end connection (19, 20) and a center connection (21), wherein

the three connections of the second choke pair (18) are joined in an arbitrary combination with the first phase branch (1), the second phase branch (2), or with the phase of the alternating voltage supply network that is assigned to the second phase branch (2), and

a third magnetically coupled choke pair (26) is provided, formed from the coupling inductance assigned to the third phase branch (3) and from an additional inductance, and connects the second and the third phase branches (2, 3) together, wherein the third choke pair (26) has a first and a second end connection (27, 28) and a center connection (29), wherein

the three connections of the third choke pair (26) are joined in an arbitrary combination with the second phase branch, the third phase branch, or with the phase of the alternating voltage supply network that is assigned to the third phase branch, wherein

- by means of the decoupling unit (600) the control differences in respect of the mutual dependence of the phase module currents on account of the magnetic coupling in the first, second and third choke pairs are computationally decoupled in such a way that current controllers (700) arranged downstream from the decoupling unit (600) assigned to the phase modules each derive decoupled computer actuating variables (U'AB, U'BC, U'CA) from the decoupled control differences, and
- the decoupled computer actuating variables are corrected by means of a coupling unit arranged downstream from the current controllers in accordance with the magnetic coupling of the first, second and third choke pairs (18, 22, 26) to obtain corrected actuating voltages.

10. Method according to Claim 8 or 9, wherein the corrected actuating voltages (UstellAB, UstellBC, UstellCA) each have a disturbing voltage (UAB, UBC, UCA) impressed upon them, wherein the disturbing voltages are determined depending on connection voltages dropped across the phase branches, and the corrected actuating voltages (uconvAB, uconvBC, uconvCA) onto which the disturbing voltages have been impressed are supplied to the control unit.

11. Method according to one of Claims 8 to 10, wherein the actuating voltages are converted by means of pulse-width modulation into control signals for driving the assigned submodules (8).

12. Method according to one of Claims 8 to 11, wherein the setpoint currents are each composed of a real setpoint current and a reactive setpoint current, wherein the real setpoint currents are determined depending on a mean value of the voltages dropped across the submodules of the associated phase module and of a predetermined DC voltage setpoint value.

**Revendications**

1. Onduleur (10, 101, 102) pour donner de la puissance réactive, comprenant
une première, une deuxième et une troisième branches (1, 2, 3) de phase, les trois branches (1, 2, 3) de phase pouvant être reliées chacune à une phase associée d'un réseau de tension alternative et être reliées entre elles suivant un montage en triangle, dans lequel

chacune des branches de phase a un module (7, 9, 11) de phase ayant un circuit série de sous-modules (8) bipolaires, dans lequel

chaque sous-module (8) a un accumulateur (82) d'énergie, ainsi qu'au moins un semi-conducteur (81) de puissance, et peut être commandé de manière à ce qu'aux pôles ($X_1$, $X_2$) du sous-module chute au moins une tension positive ou u moins une tension négative ou une tension de valeur zéro, et une tension chutant aux bornes de chaque module (7, 9, 11) de phase correspond à la somme des tensions de sous-modules chutant aux bornes de ses sous-modules (8),

les sous-modules (8) étant constitués sous la forme de circuits à pont complet, la deuxième et la troisième branches (2, 3) de phase étant reliées au moyen d'inductances de couplage aux phases qui leur sont associées du réseau de tension alternative et la première et la troisième branches (1, 3) de phase étant reliées électriquement entre elles par l'intermédiaire d'une première paire (22) de bobines couplées magnétiquement, ayant une première et une deuxième bornes (23, 24) latérales, ainsi qu'une borne (25) médiane, dans lequel

les trois bornes (23, 24, 25) de la première paire (22) de bobines sont reliées en une combinaison quelconque à la première branche (1) de phase, à la troisième branche (3) de phase et à la phase, associée à la première branche de phase, du réseau de tension alternative, dans lequel

il est prévu, en outre, un dispositif (31) de régulation pour réguler des courants de module de phase, comprenant

- des régleurs (700) de courant associés aux modules de phase,
- une unité (600) de découplage, montée en avant des régleurs (700) de courant, pour découpler par le calcul des différences de régulation, à la régulation des courants de module de phase, au vu de la dépendance mutuelle des courants de module de phase en raison du couplage magnétique dans la première paire (22) de bobines, de manière à pouvoir, au moyen des régleurs (700) de courant, déduire des grandeurs (U'AB, U'BC, U'CA) de réglage, obtenues par le calcul, découplées des différences de régulation découplées,
- une unité (800) de couplage, montée en arrière des régleurs (700) de courant, pour corriger les grandeurs de réglage découplées, obtenues par le calcul, selon le couplage magnétique de la première paire de bobines, en obtenant des tensions (UstellAB, UstellBC, UstellCA) de réglage corrigées, ainsi que
- une unité (1000) de commande pour commander les sous-modules (8), de manière à pouvoir régler les tensions chutant aux bornes des modules de phase de façon à ce qu'elles correspondent aux tensions de réglage corrigées.

2. Onduleur (10, 101, 102) suivant la revendication 1, dans lequel il est prévu une deuxième paire (18) de bobines couplées magnétiquement, qui est formée de l'inductance de couplage associée à la deuxième branche (2) de phase et d'une autre inductance et qui relie entre elles la première et la deuxième branches (1, 2) de phase, la deuxième paire de bobines étant pourvue d'une première et d'une deuxième bornes (19, 20) latérales, ainsi que d'une borne (21) médiane, dans lequel

les trois bornes de la deuxième paire (18) de bobines sont, suivant n'importe quelle combinaison, reliées à la première branche (1) de phase, à la deuxième branche (2) de phase ou à la phase du réseau de tension alternative associée à la deuxième branche (2) de phase et

il est prévu une troisième paire (26) de bobines couplée magnétiquement, qui est formée de l'inductance de couplage associée à la troisième branche (3) de phase et d'une inductance supplémentaire et qui relie entre elles la première et la troisième branches (2, 3) de phase, la troisième paire (26) de bobines étant pourvue d'une première et d'une deuxième bornes (27, 28) latérales, ainsi que d'une borne (29) médiane, dans lequel

les trois bornes (27, 28, 29) de la troisième paire (26) de bobines sont, suivant n'importe quelle combinaison, reliées à la deuxième branche (2) de phase, à la troisième branche (3) de phase ou à la phase, associée à la troisième branche de phase, du réseau de tension alternative, dans lequel

l'unité (600) de découplage est conçue supplémentairement pour le découplage par le calcul des différences (eAB, eBC, eCA) de régulation au vu de la dépendance mutuelle des courants de module de phase en raison du couplage magnétique dans la deuxième et la troisième paires (18, 26) de bobines et

l'unité (800) de couplage est conçue en obtenant des tensions de réglage corrigées suivant le couplage magnétique dans la première, deuxième et troisième paires (18, 22, 26) de bobines, pour corriger les grandeurs de réglage de calculs découplées, obtenues au moyen des régleurs de courant, à partir des différences (e'AB, e'BC, e'CA) de régulation découplées.

3.  Onduleur (10, 101, 102) suivant la revendication 1 ou 2, dans lequel la tension du sous-module correspond à la tension de l'accumulateur d'énergie.

4.  Onduleur (10, 101, 102) suivant l'une des revendications 1 à 3, dans lequel
    les accumulateurs (82) d'énergie sont des condensateurs d'accumulation.

5.  Onduleur (10, 101, 102) suivant l'une des revendications précédentes, dans lequel
    l'unité (1000) de commande est conçue pour commander les sous-modules (8) au moyen d'une modulation en largeur d'impulsion.

6.  Onduleur (10, 101, 102) suivant l'une des revendications précédentes, dans lequel
    l'onduleur (10, 101, 102) comprend, en outre, des systèmes (12, 13, 14) de mesure pour détecter les courants de module de phase et les tensions (UAB, UBC, UCA) chutant aux bornes entre les branches de phase.

7.  Onduleur (10, 101, 102) suivant l'une des revendications précédentes, dans lequel le dispositif (31) de régulation comprend, en outre, une unité (32) de traitement du signal associé aux modules de phase, ayant un formeur (100) de valeur moyenne, un formeur (200) de différence, un régleur (201) de tension, un formeur (300) de fréquence, ainsi qu'un additionneur (400), dans lequel, dans l'unité de traitement du signal

    le formeur de valeur moyenne est conçu pour former une valeur moyenne des tensions d'accumulateur d'énergie du module de phase associé,
    le formeur de différence est relié du côté de l'entrée à une sortie du formeur de valeur moyenne et est ainsi conçu pour former une différence de régulation à partir de la valeur moyenne des tensions d'accumulateur d'énergie et d'une valeur de consigne de tension continue donnée à l'avance,
    le régleur de tension est relié, du côté de l'entrée, à une sortie du formeur de différence et est conçu ainsi pour former une valeur de courant de consigne actif à partir de la différence de réglage,
    le formeur de fréquence est relié, du côté de l'entrée, du côté de l'entrée, à une sortie du régleur de tension et est conçu ainsi pour former un courant de consigne actif sinusoïdal à partir de la valeur de courant de consigne actif et
    l'additionneur est relié, à une sortie du formeur de fréquence et est ainsi conçu pour former, à partir du courant de consigne actif et d'un courant de consigne réactif, le courant de consigne pour le module de phase associé.

8.  Procédé de régulation d'un onduleur (10, 101, 102) pour donner de la puissance réactive, comprenant une première, une deuxième et une troisième branches (1, 2, 3) de phase, dans lequel les trois branches de phase peuvent être reliées chacune à une phase associée d'un réseau de tension alternative et être reliées entre elles suivant un montage en triangle, dans lequel

    chacune des branches de phase a un module (7, 9, 11) de phase ayant un circuit série de sous-modules (8) bipolaires, dans lequel

    chaque sous-module (8) a un accumulateur (82) d'énergie, ainsi qu'au moins un semi-conducteur (81) de puissance, et peut être commandé de manière à ce qu'aux pôles ($X_1$, $X_2$) du sous-module chute au moins une tension positive ou au moins une tension négative ou une tension de valeur zéro, et une tension chutant aux bornes de chaque module (7, 9, 11) de phase correspond à la somme des tensions de sous-modules chutant aux bornes de ses sous-modules (8), les sous-modules (8) étant constitués sous la forme de circuit à pont complet,

    dans lequel

    - la deuxième et la troisième branches (2, 3) de phase sont reliées au moyen d'inductances de couplage aux phases qui leur sont associées du réseau de tension alternative et
    - la première et la troisième branche (1, 3) de phase sont reliées électriquement entre elles par l'intermédiaire d'une première paire (22) de bobines couplées magnétiquement, ayant une première et une deuxième bornes (23, 24) latérales, ainsi qu'une borne (25) médiane, dans lequel

les trois bornes (23, 24, 25) de la première paire (22) de bobines sont reliées en une combinaison quelconque à la première branche de phase, à la troisième branche de phase et à la phase, associée à la première branche de phase du réseau de tension alternative,

dans lequel

- on prescrit un courant de consigne pour chaque module (7, 9, 11) de phase,
- au moyen d'une unité (600) de découplage, on découple, par le calcul, des différences (eAB, eBC, eCA) de régulation, qui sont formées à partir des courants de consigne donnés à l'avance et des courants de module de phase mesurés, au vu de la dépendance mutuelle des courants de module de phase en raison du couplage magnétique dans la première paire (22) de bobines, de manière à ce que des régleurs (700) de courant, associés aux modules de phase et montés derrière l'unité de découplage, déduisent des grandeurs (U'AB, U'BC, U'CA) de réglage obtenues par le calcul découplées des différences (eAB, eBC, eCA) de régulation découplées et
- on corrige, en obtenant des tensions (UstellAB, UstellBC, UstellCA) de réglage corrigées, selon les couplages magnétiques de la première paire (22) de bobines, les grandeurs de réglage de calcul découplées au moyen d'une unité (800) de couplage montée après les régleurs de courant, dans lequel
- on commande les sous-modules (8) des modules (7, 9, 11) de phase au moyen d'une unité (1000) de commande, de manière à ce que les tensions chutant aux bornes des modules de phase correspondent aux tensions de réglage corrigées.

9. Procédé suivant la revendication 8, dans lequel il est prévu une deuxième paire (18) de bobines couplées magnétiquement, qui est formée de l'inductance de couplage associée à la deuxième branche (2) de phase et d'une autre inductance et qui relie entre elles la première et la deuxième branches (1, 2) de phase, la deuxième paire de couplages étant pourvue d'une première et d'une deuxième bornes (19, 20) latérales, ainsi que d'une borne (21) médiane, dans lequel

les trois bornes de la deuxième paire (18) de couplages sont, suivant n'importe quelle combinaison, reliées à la première branche (1) de phase, à la deuxième branche (2) de phase ou à la phase du réseau de tension alternative associée à la deuxième branche (2) de phase et

il est prévu une troisième paire (26) de bobines couplée magnétiquement, qui est formée de l'inductance de couplage associée à la troisième branche (3) de phase et d'une inductance supplémentaire et qui relie entre elles la première et la troisième branches (2, 3) de phase, la troisième paire (26) de bobines étant pourvue d'une première et d'une deuxième bornes (27, 28) latérales, ainsi qu'une d'une borne (29) médiane, dans lequel

les trois bornes de la troisième paire (26) de bobines étant, suivant n'importe quelle combinaison, reliées à la deuxième branche (2) de phase, à la troisième branche (3) de phase ou à la phase, associée à la troisième branche de phase, du réseau de tension alternative, dans lequel

- au moyen de l'unité (600) de découplage, on découple, par le calcul, les différences de régulation au vu de la dépendance mutuelle des courants de module de phase en raison du couplage magnétique dans la première, deuxième et troisième paires de bobines, de manière à ce que les régleurs (700) de courant, associés aux modules de phase et montés derrière l'unité (600) de découplage, déduisent chacun, à partir des différences de régulation découplée, des grandeurs (U'AB, U'BC, U'CA) de réglage de calcul découplé et
- on corrige, en obtenant des tensions de réglage corrigées, des grandeurs de réglage de calcul découplées au moyen d'une unité de couplage montée derrière les régleurs de courant, selon les couplages magnétiques de la première, deuxième et troisième paires (18, 22, 26) de bobines.

10. Procédé suivant la revendication 8 ou 9, dans lequel on applique respectivement une tension (UAB, UBC, UCA) parasite aux tensions de réglage (UstellAB, UstellBC, UstellCA) corrigées, les tensions parasites étant déterminées en fonction de tensions chutant aux bornes entre les branches de phase et on envoie, à l'unité de commande, les tensions (uconvAB, uconvBC, uconvCA) de réglage corrigées, auxquelles ont été appliquées les tensions parasites.

11. Procédé suivant les revendications 8 à 10, dans lequel on transforme les tensions de réglage, au moyen d'une modulation en largeur d'impulsion, en signaux de commande, pour commander les sous-modules associés.

12. Procédé suivant les revendications 8 à 11, dans lequel on réunit les courants de consigne composés chacun d'un courant de consigne actif et d'un courant de consigne réactif, les courants de consigne actifs étant déterminés en fonction d'une valeur moyenne des tensions chutant aux bornes des sous-modules des modules de phase associés et d'une valeur de consigne de tension continue donnée à l'avance.

# FIG 1

FIG 2

FIG 3

FIG 4

EP 3 132 515 B1

# FIG 5

# FIG 6

**IN DER BESCHREIBUNG AUFGEFÜHRTE DOKUMENTE**

**In der Beschreibung aufgeführte Patentdokumente**

- WO 2013087110 A1
- US 5642275 A

- WO 2008086760 A1